# EUROPÄISCHE PATENTANMELDUNG

(11) **EP 1 394 566 A1**
(43) Veröffentlichungstag der Anmeldung: **03.03.2004**
(21) Anmeldenummer: 03019865.9
(22) Anmeldetag: 01.09.2003
(51) Int. Cl.: G01S 17/02

(54) **Verfahren zum Betreiben einer Überwachungseinrichtung sowie Überwachungseinrichtung**

(30) Priorität: 02.09.2002 DE 10240438
(71) Anmelder: SICK AG, 79183 Waldkirch/Breisgau (DE)
(72) Erfinder: Braune, Ingolf, 79194 Gundelfingen (DE)
(74) Vertreter: Manitz, Finsterwald & Partner GbR

(57) **Zusammenfassung**

Die Erfindung betrifft ein Verfahren zum Betreiben einer Überwachungseinrichtung, bei dem mittels zumindest eines optoelektronischen Sensors ein vorgegebener Überwachungsbereich überwacht wird, mittels wenigstens einer Strahlungsquelle mittels des Sensors nachweisbare Sicherheitsstrahlung in den Überwachungsbereich ausgesandt wird, und mittels einer Beleuchtungseinrichtung ein mit dem Überwachungsbereich zumindest teilweise zusammenfallender Arbeitsbereich mittels für das menschliche Auge sichtbarer Ausleuchtstrahlung ausgeleuchtet wird, wobei die Strahlungsquelle und die Beleuchtungseinrichtung derart aufeinander abgestimmt betrieben werden, dass sich die Sicherheitsstrahlung und die Ausleuchtstrahlung zumindest hinsichtlich eines einer differenzierten Auswertung zugänglichen Strahlungsparameters voneinander unterscheiden. Die Erfindung betrifft außerdem eine Überwachungseinrichtung.

## Beschreibung

Die Erfindung betrifft ein Verfahren zur Betreiben einer Überwachungseinrichtung, bei dem mittels zumindest eines optoelektronischen Sensors ein vorgegebener Überwachungsbereich überwacht wird, mittels wenigstens einer Strahlungsquelle mittels des Sensors nachweisbare Sicherheitsstrahlung in den Überwachungsbereich ausgesandt wird, und mittels einer Beleuchtungseinrichtung ein mit dem Überwachungsbereich zumindest teilweise zusammenfallender Arbeitsbereich mittels für das menschliche Auge sichtbarer Ausleuchtstrahlung ausgeleuchtet wird.

Die Erfindung betrifft ferner eine Überwachungseinrichtung mit zumindest einem optoelektronischen Sensor zur Überwachung eines vorgegebenen Überwachungsbereiches, wenigstens einer Strahlungsquelle zur Aussendung von mittels des Sensors nachweisbarer Sicherheitsstrahlung in den Überwachungsbereich, und einer Beleuchtungseinrichtung zum Ausleuchten eines mit dem Überwachungsbereich zumindest teilweise zusammenfallenden Arbeitsbereiches mittels für das menschliche Auge sichtbarer Ausleuchtstrahlung.

Die an gewerblichen Arbeitsplätzen herrschenden Arbeitsbedingungen müssen einer Vielzahl von gesetzlichen Bestimmungen genügen. Darunter befinden sich sicherheitsrelevante Bestimmungen und arbeitsrechtliche Bestimmungen. Außerdem müssen die Arbeitsbedingungen im Hinblick auf den jeweiligen Arbeitsprozess optimal sein.

Einer besonderen Bedeutung kommt der Beleuchtung von Arbeitsplätzen zu. Eine ausreichende Beleuchtung des Arbeitsplatzes wird nicht nur von arbeitsrechtlichen Bestimmungen gefordert, sondern ist auch für einen optimalen Ablauf der jeweiligen Arbeitsprozesse unerlässlich.

An vielen Arbeitsplätzen spielt außerdem die Arbeitssicherheit eine zentrale Rolle. Wenn die an dem Arbeitsplatz ablaufenden Arbeitsprozesse den Umgang mit Maschinen oder anderen eine potentielle Gefahr für sich an dem Arbeitsplatz aufhaltende Personen darstellen, dann erfolgt zunehmend eine Überwachung des Arbeitsplatzes mittels optoelektronischer Überwachungseinrichtungen, die den Arbeitsplatz und die dort ablaufenden Arbeitsprozesse überwachen und z.B. eine Maschine stoppen, sobald gefährliche oder eine potentielle Gefahr darstellende Situationen auftreten, die bestimmte, vorgegebene Bedingungen erfüllen und von der Überwachungseinrichtung als solche erkannt werden.

Derartige optoelektronische Überwachungseinrichtungen benötigen Informationen aus dem zu überwachenden Arbeitsbereich, die dadurch erhalten werden, dass der jeweilige Überwachungsbereich mit elektromagnetischer Strahlung in einem bestimmten Wellenlängenbereich beaufschlagt und die aus dem Überwachungsbereich reflektierte Strahlung bzw: die den Überwachungsbereich durchquerende elektromagnetische Strahlung mittels einer optoelektronischen Erfassungseinrichtung wie z.B. einem Kamerasystem auf das Vorliegen der erwähnten Bedingungen hin untersucht wird.

Dies bedeutet, dass an Arbeitsplätzen nicht nur Mittel zum Ausleuchten des Arbeitsbereiches, sondern außerdem Mittel zum Aussenden von - im Folgenden auch als Sicherheitsstrahlung bezeichneter - elektromagnetischer Strahlung in einen mit dem Arbeitsbereich zumindest teilweise zusammenfallenden Überwachungsbereich benötigt werden, wobei die Sicherheitsstrahlung und die jeweilige optoelektronische Erfassungseinrichtung aufeinander abgestimmt sein müssen.

Als Beispiel für eine Überwachungseinrichtung der vorstehend genannten Art sei auf die zum Anmeldezeitpunkt der vorliegenden Erfindung noch nicht veröffentlichte deutsche Patentanmeldung 101 43 504.5 (Anwaltsaktenzeichen: S 7828; LS 8/01) verwiesen.

Um den vorstehend dargelegten Anforderungen an die Arbeitsplätze gerecht werden zu können, ist ein vergleichsweise hoher Aufwand erforderlich, um eine optimale Beleuchtung zu erzielen und gleichzeitig einen hohen Sicherheitsstandard zu erfüllen, wobei ein grundsätzliches Problem darin besteht, dass die zur Beleuchtung des Arbeitsplatzes eingesetzte elektromagnetische Strahlung, die aus der Sicht der Überwachungseinrichtung auch als Fremdlicht bezeichnet wird, eine potentielle Störquelle für die optoelektronische Erfassungseinrichtung der Überwachungseinrichtung darstellt und es also notwendig ist, alle Anforderungen an den Arbeitsplatz "unter einen Hut" zu bringen.

Aufgabe der Erfindung ist es daher, eine Möglichkeit zu schaffen, auf möglichst einfache und dennoch zuverlässige Weise an einem Arbeitsplatz gleichzeitig für eine optimale Beleuchtung einerseits und eine sichere sowie zuverlässige Überwachung andererseits derart zu sorgen, dass die Beleuchtung soweit wie möglich ungestört durch die zur Überwachung getroffenen Maßnahmen erfolgen kann, und umgekehrt.

Die Lösung dieser Aufgabe erfolgt zum einen durch die Merkmale des unabhängigen Verfahrensanspruchs und insbesondere dadurch, dass ausgehend von dem eingangs genannten Verfahren zum Betreiben einer Überwachungseinrichtung die Strahlungsquelle und die Beleuchtungseinrichtung derart aufeinander abgestimmt betrieben werden, dass sich die Sicherheitsstrahlung und die Ausleuchtstrahlung zumindest hinsichtlich eines einer differenzierten Auswertung zugänglichen Strahlungsparameters voneinander unterscheiden.

Erfindungsgemäß erfolgt die Auswahl der Ausleucht- oder Beleuchtungsstrahlung, die im Folgenden auch einfach als "Licht" bezeichnet wird, und der Sicherheitsstrahlung nicht nur im Hinblick auf eine optimale Erfüllung der jeweils eigenen Funktion, d.h. der Sicherheitsfunktion einerseits und der Beleuchtungsfunktion andererseits, sondern die Sicherheitsstrahlung und das zu Beleuchtungszwecken eingesetzte Licht werden gezielt derart aufeinander abgestimmt, dass sie sich in einer Art und Weise voneinander unterscheiden, die eine durch das Licht zumindest weitgehend ungestörte Auswertung der Sicherheitsstrahlung gestattet.

Nachstehend wird eine Vielzahl von Ausführungsbeispielen für konkrete Realisierungen dieses erfindungsgemäßen Gedankens erläutert. Der Begriff "Strahlungsparameter" im Sinne der vorliegenden Erfindung ist daher breit zu interpretieren und kann grundsätzlich jeden Aspekt betreffen, hinsichtlich dessen sich die Sicherheitsstrahlung einerseits und die Ausleuchtstrahlung andererseits voneinander unterscheiden, wobei sich der unterscheidende Aspekt auch auf die Erzeugung, den Nachweis sowie das zeitliche Verhalten der jeweiligen Strahlung beziehen kann. Dabei ist unter einer "differenzierten" Auswertung eine solche zu verstehen, die den Unterschied zwischen der Ausleuchtstrahlung und der Sicherheitsstrahlung nutzen kann und eine gezielte Auswertung der Sicherheitsstrahlung ermöglicht, d.h. die zumindest im Hinblick auf die Strahlungsauswertung eine klare Trennung zwischen dem Beleuchtungspfad einerseits und dem Überwachungspfad andererseits gestattet.

Gemäß einem Ausführungsbeispiel der Erfindung ist vorgesehen, dass ein unterscheidender Strahlungsparameter der Aussendezeitpunkt der Strahlung ist und die Sicherheitsstrahlung und die Ausleuchtstrahlung zu unterschiedlichen Zeiten ausgesandt werden.

So ist es beispielsweise möglich, die Sicherheitsstrahlung und die Ausleuchtstrahlung abwechselnd auszusenden. Es kann hier gewissermaßen mit aufeinander abgestimmten Tastverhältnissen der Sicherheitsstrahlung einerseits und der Beleuchtung andererseits gearbeitet werden, wobei die eine Strahlungsart jeweils in Pausen der anderen Strahlungsart ausgesandt wird. Dabei kann die eine Strahlungsart sozusagen das Komplementär zu der anderen Strahlungsart bilden.

Die erwähnten "Sendepausen" können solche Zeitintervalle sein, in denen die Intensität der jeweiligen Strahlung Null ist oder in denen die jeweilige Strahlung zwar nach wie vor vorhanden ist, jedoch ein relatives Intensitätsminimum aufweist.

In einem besonders bevorzugten praktischen Ausführungsbeispiel der Erfindung ist vorgesehen, dass die Intensität der Ausleuchtstrahlung entsprechend der Amplitude der Wechselspannung eines vorhandenen Spannungsversorgungsnetzes variiert wird und der Nachweis der Sicherheitsstrahlung mittels des Sensors dann erfolgt, wenn die Versorgungsspannung für die Beleuchtungseinrichtung näherungsweise Null ist.

Hierdurch kann einfach das zeitliche Verhalten der Netzspannung dazu genutzt werden, während der netzbedingt vorhandenen Pausen bzw. Intensitätsminima des Lichts die Sicherheitsstrahlung auszusenden, um auf diese Weise eine durch das Licht ungestörte Überwachung durchzuführen.

Die Sicherheitsstrahlung wird insbesondere gepulst ausgesandt, und aufgrund der hohen Wiederholfrequenz der Sicherheitsstrahlungspulse erfolgt gewissermaßen eine quasi-kontinuierliche Überwachung des Arbeitsbereiches, die allen in der Praxis auftretenden Sicherheitsanforderungen gerecht wird.

Des Weiteren ist es bevorzugt, wenn der mittels des Sensors erfolgende Strahlungsnachweis und/oder die Auswertung der mittels des Sensors nachgewiesenen Sicherheitsstrahlung nur zeitweise erfolgen bzw. erfolgt. Insbesondere kann der Strahlungsnachweis bzw. die Auswertung der nachgewiesenen Sicherheitsstrahlung mit dem zeitlichen Verhalten der Aussendung der Sicherheitsstrahlung synchronisiert werden. Hierdurch. kann erreicht werden, dass der Sensor bzw. die nachgeordnete Auswerteeinrichtung nur dann aktiv sind, wenn die Aussendung der Sicherheitsstrahlung erfolgt.

Erfindungsgemäß ist es auch möglich, dass die Sicherheitsstrahlung und die Ausleuchtstrahlung gleichzeitig ausgesandt werden, wobei insbesondere die Sicherheitsstrahlung ununterbrochen ausgesandt wird.

Ein Vorteil dieser Vorgehensweise besteht darin, dass die Überwachung des Arbeitsbereiches bzw. des Überwachungsbereiches kontinuierlich erfolgt.

Gemäß einer weiteren bevorzugten Ausführungsform der Erfindung ist vorgesehen, dass ein unterscheidender Strahlungsparameter die Wellenlänge der jeweils verwendeten Strahlung ist.

Dabei kann der Sensor derart selektiv ausgelegt sein, dass er lediglich für die Sicherheitsstrahlung sensitiv ist und durch die gleichzeitig auftreffende Ausleuchtstrahlung nicht gestört wird.

Der für die Sicherheitsstrahlung eingesetzte Wellenlängenbereich kann erfindungsgemäß entweder relativ breit oder von einem vergleichsweise schmalen Wellenlängenband gebildet sein. In einem Ausführungsbeispiel wird vorgeschlagen, dass der Wellenlängenbereich für die Sicherheitsstrahlung oberhalb von 800 nm liegt. Ferner ist es möglich, jedoch nicht zwingend erforderlich, dass die Sicherheitsstrahlung im für das menschliche Auge sichtbaren Wellenlängenbereich liegt.

Die Differenzierung nach der Wellenlänge kann mittels entsprechend ausgebildeter Strahlungsquellen erfolgen. Alternativ oder zusätzlich ist es erfindungsgemäß möglich, aus der Ausleuchtstrahlung einen Wellenlängenbereich herauszufiltern und für die Sicherheitsstrahlung eine Wellenlänge oder einen Wellenlängenbereich vorzusehen, der innerhalb des heraus gefilterten Bereiches liegt, oder umgekehrt. Auch auf diese Weise kann eine vorteilhafte Trennung des Ausleuchtpfades einerseits und des Überwachungspfades andererseits erfolgen.

In Abhängigkeit von dem jeweiligen Anwendungsfall kann es bevorzugt sein, dass die Wellenlängen der Sicherheitsstrahlung und der Ausleuchtstrahlung bzw. der herausgefilterte Wellenlängenbereich in Abhängigkeit von dem Reflexionsverhalten der im Überwachungsbereich vorhandenen oder erwarteten Objekte gewählt werden. Hierdurch kann eine optimale Anpassung der Beleuchtung und der Überwachung an den jeweiligen Arbeitsprozess realisiert werden.

Eine weitere Möglichkeit zur Trennung bzw. Unterscheidung zwischen der Sicherheitsstrahlung und dem Licht besteht darin, für die Strahlungsarten unterschiedliche Polarisationseigenschaften vorzusehen. Wenn beispielsweise für die Ausleuchtstrahlung polarisiertes Licht eingesetzt wird, dann kann durch Verwenden eines entsprechend orientierten Polarisationsfilters im Strahlengang der Sicherheitsstrahlung die polarisierte Ausleuchtstrahlung zuverlässig ausgeblendet werden.

Die der Erfindung zugrunde liegende Aufgabe wird außerdem durch die Merkmale des unabhängigen Vorrichtungsanspruchs und insbesondere dadurch gelöst, dass ausgehend von der eingangs genannten Überwachungseinrichtung die Strahlungsquelle und die Beleuchtungseinrichtung derart aufeinander abgestimmt betreibbar sind, dass sich die Sicherheitsstrahlung und die Ausleuchtstrahlung zumindest hinsichtlich eines einer differenzierten Auswertung zugänglichen Strahlungsparameters voneinander unterscheiden.

In einem besonders bevorzugten praktischen Ausführungsbeispiel ist die Strahlungsquelle für die Sicherheitsstrahlung in die Beleuchtungseinrichtung integriert.

Hierdurch wird in vorteilhafter Weise lediglich ein einziges Gesamtsystem benötigt, das am jeweiligen Arbeitsplatz zu montieren ist. Die Einrichtung von Arbeitsplätzen kann hierdurch wesentlich einfacher und damit kostengünstiger durchgeführt werden.

Bei der Beleuchtungseinrichtung kann es sich um eine gezielt ausschließlich zur Ausleuchtung eines oder mehrerer Arbeitsplätze dienende Arbeitsplatzbeleuchtung oder um eine sogenannte Allgemeinbeleuchtung handeln, mit der nicht nur ein oder mehrere Arbeitsplätze, sondern außerdem deren Umgebung beleuchtet wird.

Die Strahlungsquelle für die Sicherheitsstrahlung kann des Weiteren ein Bestandteil der Beleuchtungseinrichtung sein. Insbesondere kann die Strahlungsquelle mit einer Lichtquelle der Beleuchtungseinrichtung identisch sein. In diesem Fall kann eine Trennung des Beleuchtungspfades von dem Überwachungspfad beispielsweise durch den Einsatz geeigneter Filtereinrichtungen erzielt werden.

Weitere bevorzugte Ausführungsformen der Erfindung sind in den Unteransprüchen, der Beschreibung sowie der Zeichnung angegeben.

Die Erfindung wird im Folgenden rein beispielhaft unter Bezugnahme auf die Zeichnung beschrieben. Es zeigen:
- Fig. 1: rein schematisch einen Arbeitsplatz mit einer einzigen Beleuchtungseinrichtung, in die eine Strahlungsquelle für Sicherheitsstrahlung integriert ist,
- Fig. 2: rein schematisch einen weiteren Arbeitsplatz, in dessen Bereich mehrere Beleuchtungseinrichtungen angeordnet sind, von denen lediglich einige mit einer Strahlungsquelle für Sicherheitsstrahlung versehen sind, und
- Fig. 3: rein schematisch ein Ausführungsbeispiel für eine erfindungsgemäße Überwachungseinrichtung.

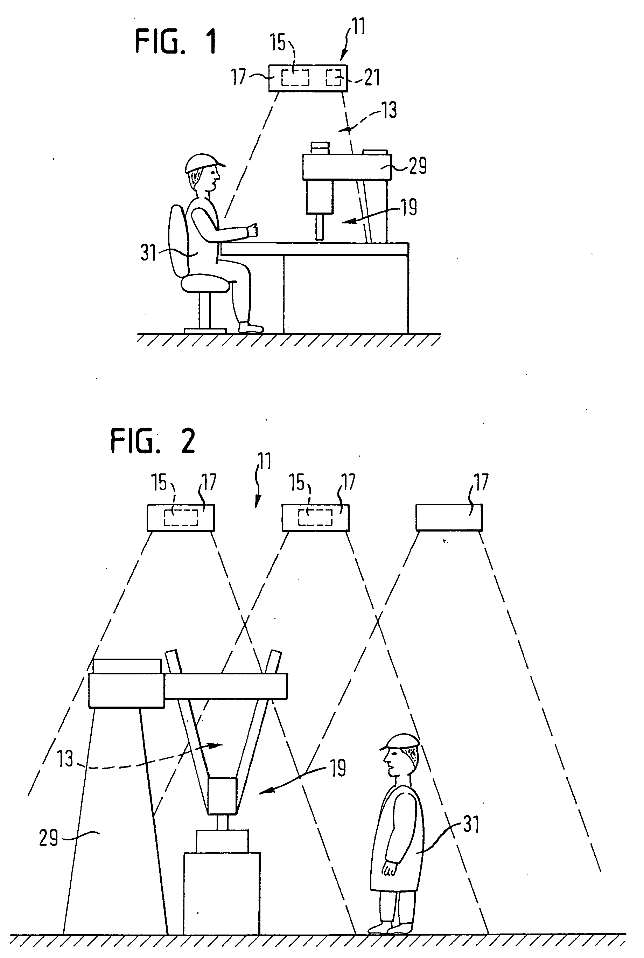

Fig. 1 zeigt einen Arbeitsplatz mit einer in einem Arbeitsbereich 19 angeordneten Maschine 29, die von einer Person 31 bedient wird bzw. an der sich eine Person 31 während des Arbeitsprozesses aufhalten muss.

Die erfindungsgemäße Überwachungseinrichtung 11 umfasst eine Beleuchtungseinrichtung 17 mit einer oder mehreren Lichtquellen zur Ausleuchtung des Arbeitsbereiches 19 sowie eine Strahlungsquelle 15, welche in die Beleuchtungseinrichtung 17 integriert ist. Die Strahlungsquelle 15 sendet Sicherheitsstrahlung mit einer vorgegebenen Wellenlänge und oder mit einem vorgegebenen Wellenlängenbereich in einen Überwachungsbereich 13 aus, der innerhalb des mittels der Beleuchtungseinrichtung 17 ausgeleuchteten Arbeitsbereiches 19 gelegen ist.

Aus dem Überwachungsbereich 13 reflektierte Sicherheitsstrahlung wird mittels eines ebenfalls in die Beleuchtungseinrichtung 17 integrierten Sensors 21 z.B. in Form einer Kamera nachgewiesen und auf das Vorliegen bestimmter Bedingungen hin untersucht, wie es im Einleitungsteil der vorliegenden Anmeldung beschrieben ist.

In Fig. 2 ist ein Arbeitsplatz dargestellt, bei dem sich wiederum eine Person 31 an einer Maschine 29 aufhalten muss. Die Ausleuchtung des Arbeitsbereiches 19 einerseits sowie von dessen Umgebung andererseits erfolgt mittels mehrerer Beleuchtungseinrichtungen 17. Diejenigen Beleuchtungseinrichtungen 17, die für die Ausleuchtung des Arbeitsbereiches 19 sorgen, sind außerdem jeweils mit einer Strahlungsquelle 15 zum Aussenden von einer Sicherheitsüberwachung des Arbeitsplatzes dienenden Sicherheitsstrahlung versehen.

Damit zeigt Fig. 2 ein Beispiel für ein vernetztes Beleuchtungs- und Sicherheitssystem, bei dem nicht jede Beleuchtungseinrichtung 17 mit einem Sensor zum Nachweis von Sicherheitsstrahlung ausgestattet ist.

In allen Ausführungsformen der Erfindung kann der Überwachungsbereich 13 parametrierbar sein, wodurch gezielt ein bestimmter Teil des Arbeitsbereiches 19 für die sicherheitsrelevante Überwachung ausgewählt werden kann. Dabei können der Überwachungsbereich 13 und der Arbeitsbereich 19 vollständig ineinander liegen oder einander überlappen.

Die Parametrierung erfolgt bevorzugt mittels einer in Fig. 1 und 2 nicht dargestellten Steuer- und Auswerteeinrichtung, die zumindest mit den Strahlungsquellen 15 für die Sicherheitsstrahlung und den (in Fig. 2 nicht dargestellten) Sensoren 21 der Überwachungseinrichtung 11 verbunden ist.

Bei dem in Fig. 2 dargestellten Anwendungsfall kann beispielsweise vorgesehen sein, dass der Überwachungsbereich 13 von demjenigen Teil des Arbeitsbereiches 19 gebildet wird, in welchem die Einzel-Überwachungsbereiche der beiden jeweils mit einer Strahlungsquelle 15 für die Sicherheitsstrahlung versehenen Beleuchtungseinrichtungen 17 einander überlappen.

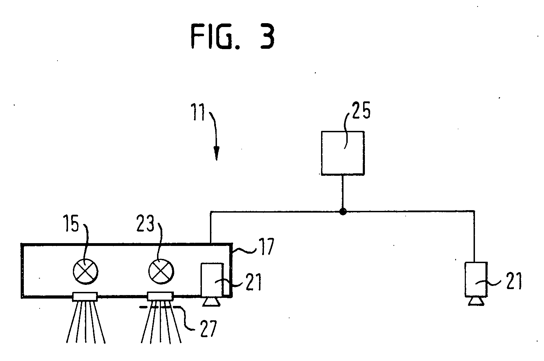

Fig. 3 veranschaulicht rein schematisch ein weiteres Ausführungsbeispiel einer erfindungsgemäßen Überwachungseinrichtung 11, bei der in eine Beleuchtungseinrichtung 17 eine Strahlungsquelle 15 für die Sicherheitsstrahlung, eine Lichtquelle 23 für das zum Ausleuchten eines Arbeitsbereiches dienende Licht sowie eine als optoelektronische Erfassungseinrichtung für die Sicherheitsstrahlung dienende Kamera 21 integriert sind.

Von der Beleuchtungseinrichtung 17 räumlich getrennt angeordnet ist eine weitere Kamera 21, die gemeinsam mit der in die Beleuchtungseinrichtung 17 integrierten Kamera 21 komplexere Überwachungsaufgaben erfüllen kann, als dies mit einer einzigen Kamera 21 möglich ist.

Die Beleuchtungseinrichtung 17 sowie die externe Kamera 21 sind an eine gemeinsame Steuer- und Auswerteeinrichtung 25 angeschlossen, mit der alle Komponenten der erfindungsgemäßen Überwachungseinrichtung 11 und insbesondere die Erzeugung, der Nachweis sowie die Auswertung der Sicherheitsstrahlung gesteuert werden.

In Fig. 3 ist außerdem eine vor der Lichtquelle 23 angeordnete Filtereinrichtung 27 angedeutet, mit der ein vorgegebener Wellenlängenbereich aus der von der Lichtquelle 23 emittierten Strahlung herausgefiltert wird. Innerhalb dieses Wellenlängenbereiches liegt die von der Strahlungsquelle 15 emittierte Sicherheitsstrahlung, die mit den Kameras 21 nachweisbar ist, wobei die Kameras 21 bzw. die nachgeordneten Auswerteeinheiten jeweils derart ausgelegt sind, dass außerhalb des herausgefilterten Bereiches liegende Wellenlängen im Überwachungspfad unproblematisch sind bzw. überhaupt keine Rolle spielen, wodurch eine sichere Trennung des Beleuchtungspfades einerseits und des Überwachungspfades andererseits geschaffen wird.

Grundsätzlich können die im Einleitungsteil der Anmeldung beschriebenen Möglichkeiten für eine differenzierte Auswertung der Informationen über den Überwachungsbereich 13 transportierenden Strahlung, d.h. für eine zuverlässige Trennung des Beleuchtungspfades von dem Überwachungspfad, in Verbindung mit allen vorstehend beschriebenen Ausführungsbeispielen eingesetzt werden.

Ferner können in einem Ausführungsbeispiel grundsätzlich mehrere Möglichkeiten zur Trennung von Ausleuchtung und Überwachung miteinander kombiniert werden, d.h. die Sicherheitsstrahlung und die Ausleuchtstrahlung können sich gleichzeitig hinsichtlich mehrerer Strahlungsparameter voneinander unterscheiden.

### Bezugszeichenliste

- 11: Überwachungseinrichtung
- 13: Überwachungsbereich
- 15: Strahlungsquelle
- 17: Beleuchtungseinrichtung
- 19: Arbeitsbereich
- 21: Sensor, Kamera
- 23: Lichtquelle
- 25: Steuer- und Auswerteeinrichtung
- 27: Filter
- 29: Maschine
- 31: Person

## Patentansprüche

1. Verfahren zum Betreiben einer Überwachungseinrichtung (11), bei dem
- mittels zumindest eines optoelektronischen Sensors (21) ein vorgegebener Überwachungsbereich (13) überwacht wird,
- mittels wenigstens einer Strahlungsquelle (15) mittels des Sensors (21) nachweisbare Sicherheitsstrahlung in den Überwachungsbereich (13) ausgesandt wird, und
- mittels einer Beleuchtungseinrichtung (17) ein mit dem Überwachungsbereich (13) zumindest teilweise zusammenfallender Arbeitsbereich (19) mittels für das menschliche Auge sichtbarer Ausleuchtstrahlung ausgeleuchtet wird,
wobei die Strahlungsquelle (15) und die Beleuchtungseinrichtung (17) derart aufeinander abgestimmt betrieben werden, dass sich die Sicherheitsstrahlung und die Ausleuchtstrahlung zumindest hinsichtlich eines einer differenzierten Auswertung zugänglichen Strahlungsparameters voneinander unterscheiden.

2. Verfahren nach Anspruch 1,
**dadurch gekennzeichnet,**
**dass** ein unterscheidender Strahlungsparameter der Aussendezeitpunkt der Strahlung ist und die Sicherheitsstrahlung und die Ausleuchtstrahlung zu unterschiedlichen Zeiten ausgesandt werden.

3. Verfahren nach Anspruch 1 oder 2,
**dadurch gekennzeichnet,**
**dass** die Sicherheitsstrahlung und die Ausleuchtstrahlung abwechselnd ausgesandt werden.

4. Verfahren nach einem der vorhergehenden Ansprüche,
**dadurch gekennzeichnet,**
**dass** ein unterscheidender Strahlungsparameter die Intensität oder der zeitliche Verlauf der Intensität der Strahlung ist.

5. Verfahren nach einem der vorhergehenden Ansprüche,
**dadurch gekennzeichnet,**
**dass** die Sicherheitsstrahlung jeweils in Sendepausen oder während relativer Intensitätsminima der Ausleuchtstrahlung ausgesandt wird, oder umgekehrt.

6. Verfahren nach einem der vorhergehenden Ansprüche,
**dadurch gekennzeichnet,**
**dass** die Intensität der Ausleuchtstrahlung entsprechend der Amplitude der Wechselspannung eines vorhandenen Spannungsversorgungsnetzes variiert wird und der Nachweis der Sicherheitsstrahlung mittels des Sensors (21) dann erfolgt, wenn die Versorgungsspannung für die Beleuchtungseinrichtung (17) näherungsweise Null ist.

7. Verfahren nach einem der vorhergehenden Ansprüche,
**dadurch gekennzeichnet,**
**dass** der mittels des Sensors (21) erfolgende Strahlungsnachweis und/oder die Auswertung der mittels des Sensors (21) nachgewiesenen Sicherheitsstrahlung nur zeitweise erfolgen bzw. erfolgt.

8. Verfahren nach einem der vorhergehenden Ansprüche,
**dadurch gekennzeichnet,**
**dass** der mittels des Sensors (21) erfolgende Strahlungsnachweis in Sendepausen oder während relativer Intensitätsminima der Ausleuchtstrahlung erfolgt.

9. Verfahren nach einem der vorhergehenden Ansprüche,
**dadurch gekennzeichnet,**
**dass** die Sicherheitsstrahlung und die Ausleuchtstrahlung gleichzeitig ausgesandt werden, wobei insbesondere die Sicherheitsstrahlung ununterbrochen ausgesandt wird.

10. Verfahren nach einem der vorhergehenden Ansprüche,
**dadurch gekennzeichnet,**
**dass** ein unterscheidender Strahlungsparameter die Wellenlänge der jeweils verwendeten Strahlung ist.

11. Verfahren nach einem der vorhergehenden Ansprüche,
**dadurch gekennzeichnet,**
**dass** aus der Ausleuchtstrahlung ein Wellenlängenbereich herausgefiltert wird und die Wellenlänge der Sicherheitsstrahlung innerhalb des herausgefilterten Bereiches liegt, oder umgekehrt.

12. Verfahren nach einem der vorhergehenden Ansprüche,
**dadurch gekennzeichnet,**
**dass** die Wellenlängen der Sicherheitsstrahlung und der Ausleuchtstrahlung bzw. der herausgefilterte Wellenlängenbereich in Abhängigkeit von dem Reflexionsverhalten der im Überwachungsbereich vorhandenen oder erwarteten Objekte gewählt werden.

13. Verfahren nach einem der vorhergehenden Ansprüche,
**dadurch gekennzeichnet,**
**dass** ein unterscheidender Strahlungsparameter die Polarisationseigenschaft der Strahlung ist.

14. Überwachungseinrichtung mit
- zumindest einem optoelektronischen Sensor (21) zur Überwachung eines vorgegebenen Überwachungsbereiches (13),
- wenigstens einer Strahlungsquelle (15) zur Aussendung von mittels des Sensors (21) nachweisbarer Sicherheitsstrahlung in den Überwachungsbereich (13), und
- einer Beleuchtungseinrichtung (17) zum Ausleuchten eines mit dem Überwachungsbereich (13) zumindest teilweise zusammenfallenden Arbeitsbereiches (19) mittels für das menschliche Auge sichtbarer Ausleuchtstrahlung,
wobei die Strahlungsquelle (15) und die Beleuchtungseinrichtung (17) derart aufeinander abgestimmt betreibbar sind, dass sich die Sicherheitsstrahlung und die Ausleuchtstrahlung zumindest hinsichtlich eines einer differenzierten Auswertung zugänglichen Strahlungsparameters voneinander unterscheiden.

15. Überwachungseinrichtung nach Anspruch 14,
**dadurch gekennzeichnet,**
**dass** die Strahlungsquelle (15) und die Beleuchtungseinrichtung (17) zeitlich aufeinander abgestimmt betreibbar und die Sicherheitsstrahlung und die Ausleuchtstrahlung zu unterschiedlichen Zeiten aussendbar sind.

16. Überwachungseinrichtung nach Anspruch 14 oder 15,
**dadurch gekennzeichnet,**
**dass** die Sicherheitsstrahlung und die Ausleuchtstrahlung abwechselnd aussendbar sind.

17. Überwachungseinrichtung nach einem der Ansprüche 14 bis 16,
**dadurch gekennzeichnet,**
**dass** die Sicherheitsstrahlung in Sendepausen oder während relativer Intensitätsminima der Ausleuchtstrahlung aussendbar ist, oder umgekehrt.

18. Überwachungseinrichtung nach einem der Ansprüche 14 bis 17,
**dadurch gekennzeichnet,**
**dass** der mittels des Sensors (21) erfolgende Strahlungsnachweis zeitweise unterbrechbar und auf den zeitlichen Verlauf der Intensität der Ausleuchtstrahlung abstimmbar ist.

19. Überwachungseinrichtung nach einem der Ansprüche 14 bis 18,
**dadurch gekennzeichnet,**
**dass** der mittels des Sensors (21) erfolgende Strahlungsnachweis jeweils in Sendepausen oder während relativer Intensitätsminima der Ausleuchtstrahlung durchführbar ist.

20. Überwachungseinrichtung nach einem der Ansprüche 14 bis 19,
**dadurch gekennzeichnet,**
**dass** die Sicherheitsstrahlung und die Ausleuchtstrahlung gleichzeitig aussendbar sind.

21. Überwachungseinrichtung nach einem der Ansprüche 14 bis 20,
**dadurch gekennzeichnet,**
**dass** für die mittels des Sensors (21) nachgewiesene Sicherheitsstrahlung und die Ausleuchtstrahlung unterschiedliche Wellenlängen vorgesehen sind.

22. Überwachungseinrichtung nach einem der Ansprüche 14 bis 21,
**dadurch gekennzeichnet,**
**dass** im Strahlengang der Ausleuchtstrahlung ein Filter (27) angeordnet ist, mit dem ein Wellenlängenbereich herausfilterbar ist, in welchem die Wellenlänge der Sicherheitsstrahlung liegt, oder umgekehrt.

23. Überwachungseinrichtung nach einem der Ansprüche 14 bis 22,
**dadurch gekennzeichnet,**
**dass** für die mittels des Sensors (21) nachgewiesene Sicherheitsstrahlung und die Ausleuchtstrahlung unterschiedliche Polarisationseigenschaften vorgesehen sind.

24. Überwachungseinrichtung nach einem der Ansprüche 14 bis 23,
**dadurch gekennzeichnet,**
**dass** die Strahlungsquelle (15) für die Sicherheitsstrahlung in die Beleuchtungseinrichtung (17) integriert ist, insbesondere in eine Arbeitsplatzbeleuchtung oder eine Allgemeinbeleuchtung.

25. Überwachungseinrichtung nach einem der Ansprüche 14 bis 24,
**dadurch gekennzeichnet,**
**dass** die Strahlungsquelle (15) für die Sicherheitsstrahlung ein Bestandteil der Beleuchtungseinrichtung (17) und insbesondere mit einer Lichtquelle (23) der Beleuchtungseinrichtung (17) identisch ist.

26. Überwachungseinrichtung nach einem der Ansprüche 14 bis 25,
**dadurch gekennzeichnet,**
**dass** sie gemäß einem Verfahren nach einem der Ansprüche 1 bis 13 betreibbar ist.
